# EUROPEAN PATENT APPLICATION

(11) **EP 4 464 787 A1**
(43) Date of publication of application: **20.11.2024**
(21) Application number: 22920227.0
(22) Date of filing: 13.01.2022
(51) Int. Cl.: C12Q 1/00, G01N 21/64, G02B 7/28, G02B 21/00, G02B 21/02

(54) **OBSERVATION METHOD AND OBSERVATION DEVICE**

(71) Applicant: HITACHI HIGH-TECH CORPORATION, Tokyo 105-6409 (JP)
(72) Inventor: YAMASHITA Tatsuya, Tokyo 105-6409 (JP); SONEHARA Tsuyoshi, Tokyo 105-6409 (JP); MASUYA Akira, Tokyo 105-6409 (JP); NISHIURA Kento, Tokyo 105-6409 (JP)
(74) Representative: MERH-IP Matias Erny Reichl Hoffmann Patentanwälte PartG mbB
(86) International application number: PCT/JP2022/000875
(87) International publication number: WO 2023/135702

(57) **Abstract**

The present invention tries to speed up autofocus executed in a plurality of successively observed observation areas. This method for successively observing an ith observation area and an (i+1)th observation area, which are targets to be observed, involves executing autofocus in the ith observation area (S3); when autofocus is achieved in the ith observation area (S4: Yes), imaging the ith observation area (S5); and executing autofocus in the (i+1) observation area, starting from the position of an objective lens at the time when autofocus is achieved in the ith observation area (S3 and S4).

## Description

### Technical Field

The present invention relates to an observation method and an observation device for successively observing a plurality of observation areas.

### Background Art

A method for measuring fine particles such as bacteria in a liquid mainly includes a light scattering method for analyzing scattering of light and an image imaging method for imaging an image of fine particles by a microscope or the like.

In the light scattering method, a liquid to be measured is irradiated with light. The light incident in the liquid is scattered by fine particles in the liquid, and an amount of light transmitted through the liquid is attenuated as compared with an amount of incident light. A size and the number of the fine particles are measured based on the attenuation. As a medical device using the light scattering method, for example, there is a drug sensitivity testing device that tests a bacteria growth inhibiting effect of an antibacterial agent by measuring an amount of bacteria in a solution containing the antibacterial agent. However, since the light scattering method has low sensitivity, it takes one day and night to culture bacteria. As a result, there is a problem that a measurement time is long.

In recent years, speeding up of a drug sensitivity test is studied by applying the image imaging method capable of detecting bacteria in a solution with higher sensitivity than that in the light scattering method. In a drug sensitivity test to which the image imaging method is applied, a culture solution containing bacteria and an antibacterial agent is cultured in culture vessels (for example, well plates), and bacteria in each culture vessel are imaged at every set time. Then, whether there is bacteria growth in a solution containing the antibacterial agent is determined by measuring feature data such as sizes, the number, and shapes of bacteria based on an imaged image and monitoring changes over time in measurement results (PTL 1).

In order to observe states of bacteria by the image imaging method, an observation device capable of performing an accurate focusing operation is required. Autofocus is known in which light is emitted from a focusing light source to an object to be measured and reflected light from the object to be measured is measured to automatically perform a focusing operation (PTL 2).

### Citation List

### Patent Literature

PTL 1: JP2015-177768A
PTL 2: JP2010-191298A

### Summary of Invention

### Technical Problem

In PTL 1, a culture plate having a plurality of observation areas into which a bacterial suspension, a culture solution, and an antibacterial agent are introduced is used as a sample, each observation area is imaged using a microscope optical system at a certain set time interval, and feature data such as the number, areas, and shapes of bacteria is measured based on an imaged image. In PTL 1, whether there is bacteria growth in a solution containing the antibacterial agent is determined by monitoring changes over time in measurement results. In PTL 1, it is necessary to increase the number of culture plates to be imaged within the set time in order to improve throughput. Therefore, it is necessary to speed up autofocus. However, PTL 1 does not mention anything about speeding up of autofocus.

In PTL 2, when an autofocus error occurs in a certain observation area, a focus position of the observation area in which the autofocus error occurred is estimated based on focus positions of a plurality of other observation areas (S7), and AF is turned on from the focus position (S2). Accordingly, in PTL 2, autofocus related to a retry performed when the autofocus error occurs may be completed more quickly. However, in PTL 2, in normal autofocus before the occurrence of the autofocus error, processing of setting an initial position of an objective lens as in the above-described S7 is not executed before the AF is turned on. Therefore, in PTL 2, autofocus is started from a home position every time the objective lens moves to a subsequent observation point. Accordingly, in PTL 2, it is required to repeat movement of the objective lens from the home position to a focus position, and when focus positions of observation areas to be successively observed are substantially the same position, it is not possible to achieve high-speed autofocus.

The invention provides a technique capable of speeding up autofocus executed in a plurality of successively observed observation areas.

### Solution to Problem

In order to solve the above problem, the invention provides an observation method for successively observing a first observation area and a second observation area which are observation targets. The observation method includes: executing autofocus in the first observation area; and in a case where the autofocus in the first observation area is successful, imaging the first observation area and executing the autofocus in the second observation area starting from a first position of an objective lens when the autofocus in the first observation area is successful.

### Advantageous Effects of Invention

According to the invention, it is possible to speed up autofocus executed in a plurality of successively observed observation areas.

Problems, configurations, and effects other than those described above will be clarified by the following description according to Embodiments.

### Brief Description of Drawings

[FIG. 1] FIG. 1 is a schematic configuration diagram showing an observation device according to Embodiment 1.
[FIG. 2] FIG. 2 is a hardware block diagram showing a control unit of the observation device according to Embodiment 1.
[FIG. 3] FIG. 3 is a flowchart showing an observation method executed by the observation device according to Embodiment 1.
[FIG. 4] FIG. 4 is a flowchart showing an observation method executed by an observation device according to Embodiment 2.
[FIG. 5A] FIG. 5A is a flowchart showing an observation method executed by an observation device according to Embodiment 3.
[FIG. 5B] FIG. 5B is a flowchart showing the observation method executed by the observation device according to Embodiment 3.
[FIG. 6] FIG. 6 is a flowchart showing an observation method executed by an observation device according to Embodiment 4.

### Description of Embodiments

Embodiments of the invention will be described in detail with reference to the drawings. In the following embodiments, it is needless to say that a configuration (including steps in a flowchart) is not necessarily essential unless otherwise specified or unless clearly considered to be essential in principle. Hereinafter, preferred embodiments of the invention will be described with reference to the drawings.

### [Embodiment 1]

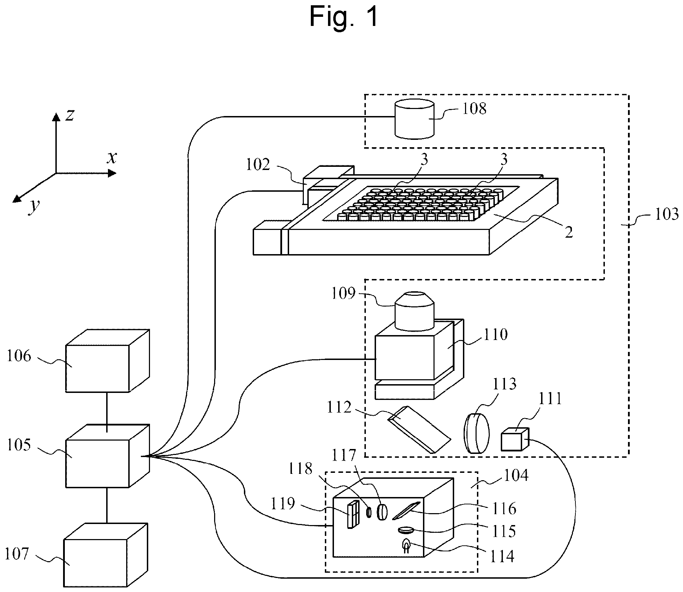

FIG. 1 is a schematic configuration diagram showing an observation device according to Embodiment 1. A configuration of an observation device 1 according to Embodiment 1 will be described with reference to FIG. 1.

### <Configuration of Observation Device>

The observation device 1 is an observation device for observing a well plate 2. An observation target to be observed by the observation device 1 is not limited to a well plate, and may be a plurality of preparations or a culture vessel as long as the observation target has a plurality of observation areas. The well plate 2 may be formed with a plurality of wells in which samples are accommodated, and the plurality of wells serve as observation areas 3. The observation device 1 successively observes the plurality of observation areas 3 of the well plate 2 in a predetermined order. The observation device 1 includes an XY stage unit 102, an inverted microscope optical system 103, an autofocus unit 104, a control unit 105, an image processing unit 106, and a storage unit 107.

The XY stage unit 102 moves the well plate 2 in a planar manner (in an X-axis direction and a Y-axis direction) to provide the desired observation area 3 of the well plate 2 at an observation point. The observation point is on an optical axis of an objective lens 109 to be described later. In Embodiment 1, the XY stage unit 102 moves the well plate 2 in the X-axis direction and the Y-axis direction. Alternatively, the XY stage unit 102 may move the inverted microscope optical system 103 in the X-axis direction and the Y-axis direction to provide the desired observation area 3 at an observation point.

The inverted microscope optical system 103 images each of the plurality of observation areas 3 of the well plate 2. The inverted microscope optical system 103 includes an illumination 108 for imaging the well plate 2, the objective lens 109, an objective lens actuator 110 that moves the objective lens 109 in a Z-axis direction, an image sensor 111, a dichroic mirror 112 for forming an image incident from the objective lens 109 on the image sensor 111, and an image-forming lens 113. In Embodiment 1, the illumination 108 is a transmitted illumination installed at a position opposite to the objective lens 109 with the well plate 2 interposed between the illumination 108 and the objective lens 109. Alternatively, the illumination 108 may be a reflection illumination that irradiates the well plate 2 with light from immediately below the obj ective lens 109 by a beam splitter or the like. The image sensor 111 may be a CMOS image sensor or a CCD image sensor.

The autofocus unit 104 executes autofocus in each of the observation areas 3. The autofocus unit 104 executes autofocus within a certain time, outputs a success signal when the autofocus is successful within the certain time, and outputs an error signal when the autofocus fails within the certain time. The autofocus unit 104 includes a focusing light source 114, a collimating lens 115, a beam splitter 116, a focusing image-forming lens 117, a cylindrical lens 118, and a light receiving element 119. A light beam emitted from the focusing light source 114 is converted into parallel light by the collimating lens 115, passes through the beam splitter 116, the dichroic mirror 112, and the objective lens 109, and is emitted to a bottom surface of the well plate 2. The light beam emitted to the bottom surface of the well plate 2 passes through the objective lens 109 and the dichroic mirror 112, and is reflected by the beam splitter 116. Light reflected by the beam splitter 116 passes through the focusing image-forming lens 117 and the cylindrical lens 118 and forms an image on the light receiving element 119. The light receiving element 119 converts a received optical signal or optical energy into an electrical signal or electrical energy, and outputs the electrical signal or electrical energy to the control unit 105.

The control unit 105 controls an operation of each unit of the observation device 1. For example, the control unit 105 controls the XY stage unit 102 to move the desired observation area 3 of the well plate 2 to an observation point. Based on the electrical signal output from the light receiving element 119 of the autofocus unit 104, the control unit 105 controls the obj ective lens actuator 110 to move the obj ective lens 109 to a focus position. The control unit 105 acquires images of the observation areas 3 imaged by the image sensor 111, stores the images in the storage unit 107, and transfers the images to the image processing unit 106.

The image processing unit 106 executes image processing on the images imaged by the image sensor 111, and calculates feature data such as sizes, the number, and shapes of microorganisms (for example, bacteria) contained in samples in the observation areas 3.

The storage unit 107 stores the feature data calculated based on the images of the observation areas 3, information indicating the observation area 3 in which the autofocus fails, and the like. The storage unit 107 may store raw data or compressed data of the images of the observation areas 3.

### <Hardware Configuration of Control Unit>

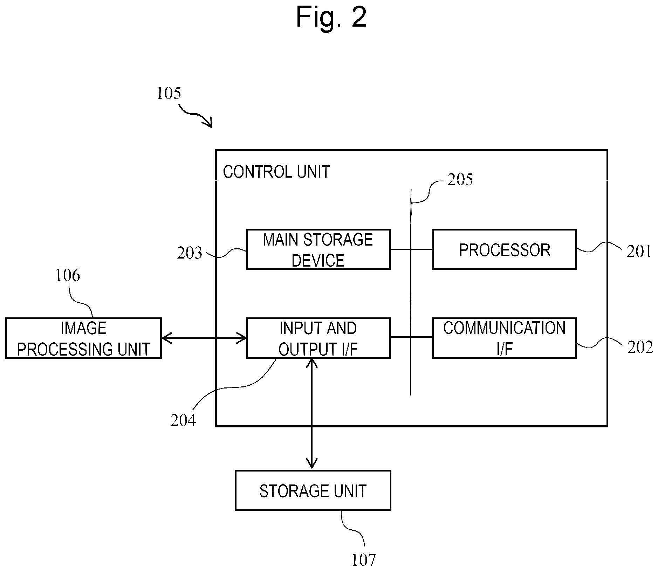

FIG. 2 is a block diagram showing a hardware configuration of the control unit. The hardware configuration of the control unit 105 according to Embodiment 1 will be described with reference to FIG. 2.

The control unit 105 includes a processor 201, a communication interface 202 (hereinafter, the interface is abbreviated as an I/F), a main storage device 203, an input and output I/F 204, and a bus 205 that communicably connects the above-described modules.

The processor 201 is a central processing unit that controls an operation of each unit of the observation device 1. The processor 201 is, for example, a central processing unit (CPU), a digital signal processor (DSP), or an application specific integrated circuit (ASIC). The processor 201 loads a program stored in the storage unit 107 to a work area of the main storage device 203 in an executable manner. The main storage device 203 stores a program to be executed by the processor 201, data processed by the processor, and the like. The main storage device 203 is a flash memory, a random access memory (RAM), a read only memory (ROM), or the like. The storage unit 107 is communicably connected to the control unit 105 via the input and output I/F 204. The storage unit 107 stores various programs such as an operating system (OS) and various kinds of data (the above-described feature data, information indicating the observation area 3 in which the autofocus fails, and the like). The storage unit 107 is, for example, a silicon disk including a nonvolatile semiconductor memory (a flash memory, erasable programmable ROM (EPROM)), a solid state drive device, or a hard disk drive (HDD) device. The image processing unit 106 is communicably connected to the control unit 105 via the input and output I/F 204. The image processing unit 106 is, for example, a CPU, a DSP, or an ASIC. The processor 201 may have a function serving as the image processing unit 106.

### <Observation Method Executed by Observation device 1>

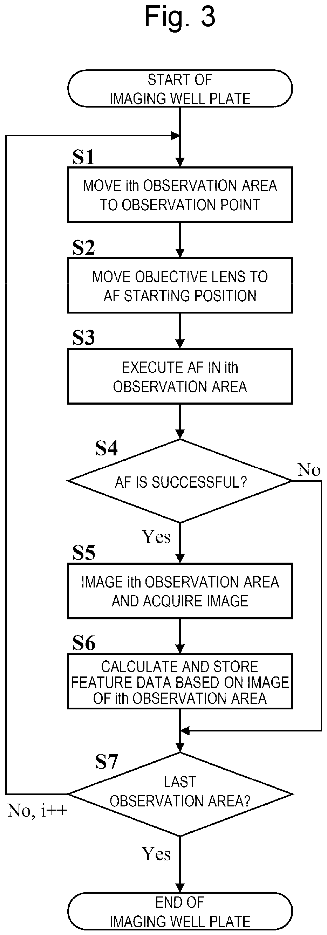

FIG. 3 is a flowchart showing an observation method executed by the observation device 1 according to Embodiment 1. Each step in the flowchart shown in FIG. 3 is executed by executing a program loaded into the main storage device 203 by the processor 201 of the control unit 105 which is a computer system. The observation device 1 executes autofocus in each of the observation areas 3 of the well plate 2 to acquire a focused image of each observation area 3. Hereinafter, autofocus is appropriately abbreviated as AF.

The well plate 2 that accommodates a sample in each of the observation areas 3 is transported to the XY stage unit 102 by a transport device (not shown). Code information embedded with identification information for identifying the well plate 2 is attached to or printed on the well plate 2. The well plate 2 is identified by reading the code information by a bar code reader (not shown). When the well plate 2 is transported to the XY stage unit 102, the processing in the flowchart shown in FIG. 2 is started.

First, the control unit 105 controls the XY stage unit 102 to move the ith observation area 3 of the well plate 2 placed on the XY stage unit 102 to an observation point of the inverted microscope optical system 103 in order to observe the ith observation area 3, i being an integer of 1 or more and an initial value being 1 (S1). Next, the control unit 105 controls the objective lens actuator 110 to move the objective lens 109 to an autofocus starting position (hereinafter, appropriately referred to as "AF starting position") (S2). The AF starting position is a home position whose initial value is a predetermined position. That is, when i = 1, the AF starting position is the predetermined home position.

The AF starting position in the case of i = 2 or larger starts from a position (a focus position) of the objective lens 109 when immediately preceding autofocus is successful. For example, when the autofocus is successful in the case of i = 1, the AF starting position in the case of i = 2 starts from a position of the objective lens 109 when the autofocus is successful in the case of i = 1. That is, in Embodiment 1, in a case where the autofocus is successful in the ith observation area (a first observation area) 3, autofocus is executed in the (i+1)th observation area (a second observation area) 3 starting from a position (a first position) of the objective lens 109 when the autofocus is successful in the ith observation area 3. Executing autofocus in the (i+1)th observation area 3 starting from the position of the objective lens 109 when the autofocus is successful in the ith observation area 3 includes executing autofocus from this position and executing autofocus from a position shifting from this position.

Then, the control unit 105 controls the autofocus unit 104 to execute autofocus in the ith observation area 3 (S3). During the execution of the autofocus, the control unit 105 controls the objective lens actuator 110 to move the objective lens 109 in the Z-axis direction based on an electrical signal output from the light receiving element 119 of the autofocus unit 104.

Next, the control unit 105 determines whether the autofocus is successful (S4). The autofocus unit 104 outputs a success signal when the autofocus is successful within a certain time, and outputs an error signal when the autofocus fails within the certain time. The control unit 105 determines whether the autofocus is successful according to the success signal and the error signal received from the autofocus unit 104. When it is determined that the autofocus is successful within the certain time (S4: Yes), the control unit 105 images the ith observation area 3 at a focus position of the ith observation area 3 and acquires an image of the ith observation area 3 (S5). The image processing unit 106 executes image processing on the acquired image and calculates feature data such as sizes, the number, and shapes of microorganisms contained in the ith observation area 3. Then, the control unit 105 stores the feature data calculated by the image processing unit 106 in the storage unit 107 (S6). The control unit 105 may store the image of the observation area 3 in the storage unit 107. Next, the control unit 105 proceeds the processing to S7.

When it is determined that the autofocus fails (S4: No), the control unit 105 proceeds the processing to S7 without executing the processing in S5 (imaging the observation area 3 and acquiring the image) and the processing in step 6 (storing the feature data). In Embodiment 1, when the autofocus fails, the processing in S5 and the processing in step 6 are not executed. Alternatively, the processing in S5 and the processing in step S6 may be executed. In this case, the acquired image of the observation area 3 is not imaged at the focus position, and thus becomes a defocus image. A user can use the defocus image for trouble shooting. That is, the imaging and the image acquisition of the observation area 3 which is an autofocus target may be executed regardless of whether the autofocus is successful or fails.

Next, the control unit 105 determines whether the ith observation area 3 is the last observation area 3 of the well plate 2 (S7). When it is determined that the ith observation area 3 is the last observation area 3 of the well plate 2 (S7: Yes), the control unit 105 ends the flowchart. On the other hand, when it is determined that the ith observation area 3 is not the last observation area 3 of the well plate 2 (S7: No), i is incremented and the processing returns to S1.

### <AF Starting Position after Autofocus fails>

Next, the AF starting position of autofocus in the subsequent (i+1)th observation area 3 when the autofocus fails in the ith observation area 3 will be described. In Embodiment 1, when the autofocus fails in the ith observation area 3, the AF starting position of autofocus in the (i+1)th observation area 3 is the home position. That is, in Embodiment 1, when the autofocus fails in the immediately preceding observation area 3, the AF starting position of autofocus in the current observation area 3 is the home position.

In a case where the autofocus fails in the ith observation area 3, the AF starting position of autofocus in the (i+1)th observation area 3 may be a position of the objective lens 109 when the immediately preceding autofocus is successful. That is, in a case where the autofocus in the ith observation area (the first observation area) 3 is successful and the autofocus in the (i+1)th observation area (the second observation area) 3 fails, the AF starting position of autofocus in the (i+2)th observation area (a third observation area) 3 is a position (a first position) of the objective lens 109 when the autofocus in the ith observation area 3 is successful. In a case where the autofocus in the ith observation area (the first observation area) 3 is successful and the autofocus in the (i+1)th observation area (the second observation area) 3 is successful, the AF starting position of the autofocus in the (i+2)th observation area (the third observation area) 3 is a position (a second position) of the objective lens 109 when the autofocus in the (i+1)th observation area 3 is successful.

### <Effects of Embodiment 1>

In the well plate 2 having a certain degree of flatness, there is a high possibility that a focus position of the (i+1)th observation area 3 adjacent to the ith observation area 3 is present at substantially the same position as a focus position of the ith observation area 3. Accordingly, a moving distance of the objective lens 109 until the autofocus in the (i+1)th observation area 3 is successful can be shortened by setting an autofocus starting point in the (i+1)th observation area 3 as the focus position of the ith observation area 3. As a result, it is possible to speed up the autofocus in the (i+1)th observation area 3.

In Embodiment 1, when the autofocus in the ith observation area 3 is successful, the objective lens 109 is kept at the focus position at the time of the success. When autofocus in the subsequent (i+1)th observation area 3 is executed, the autofocus is executed starting from the position where the objective lens 109 is kept. Under such control, it is not necessary to store information indicating a position where the autofocus is successful in a memory, and it is not necessary to prepare a memory or a memory area for storing the information indicating the position where the autofocus is successful.

In Embodiment 1, autofocus is limited within a certain time, and when the autofocus is not successful within the certain time, it is determined that the autofocus fails. Accordingly, autofocus in the subsequent observation area 3 can be started after a certain time at the least. Accordingly, it is possible to prevent a matter that the subsequent observation area 3 cannot be observed due to continuous failure of autofocus in the certain observation area 3. As a result, autofocus can be executed in all of the observation areas 3 of the well plate 2.

### [Embodiment 2]

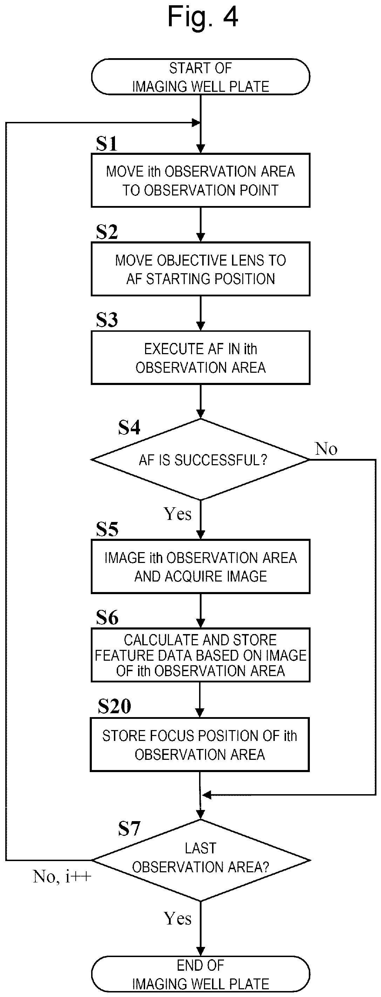

FIG. 4 is a flowchart showing an observation method executed by the observation device 1 according to Embodiment 2. Description overlapping with Embodiment 1 will be omitted as appropriate. It is not necessary to prepare a memory for storing an autofocus starting position in the observation device 1 according to Embodiment 1, but the observation device 1 according to Embodiment 2 includes a memory for storing the autofocus starting position.

The control unit 105 stores the feature data calculated by the image processing unit 106 in the storage unit 107 (S6), and then stores the focus position of the ith observation area 3 in the memory as the AF starting position of the autofocus in the (i+1)th observation area 3 (S20). The memory may be, for example, the main storage device 203, the storage unit 107, or another memory (such as a cache of the processor 201). An execution order of S6 and S20 may be reversed. The AF starting position stored in the memory is updated each time the autofocus is successful.

### <Effects of Embodiment 2>

Even when a position of the objective lens 109 is changed due to a failure of the autofocus or the like, the position of the objective lens 109 can be returned to the AF starting position using the AF starting position stored in the memory. Accordingly, in a case where the autofocus in the ith observation area 3 is successful and the autofocus in the (i+1)th observation area 3 fails, the AF starting position of the autofocus in the (i+2)th observation area 3 can be set to a position of the objective lens 109 when the autofocus in the ith observation area 3 is successful.

When the AF starting position is stored in the nonvolatile memory, after the observation device 1 is restarted or the like, the autofocus can be executed starting from the AF starting position stored in the memory. Other effects are the same as those in Embodiment 1, and description thereof is omitted.

### [Embodiment 3]

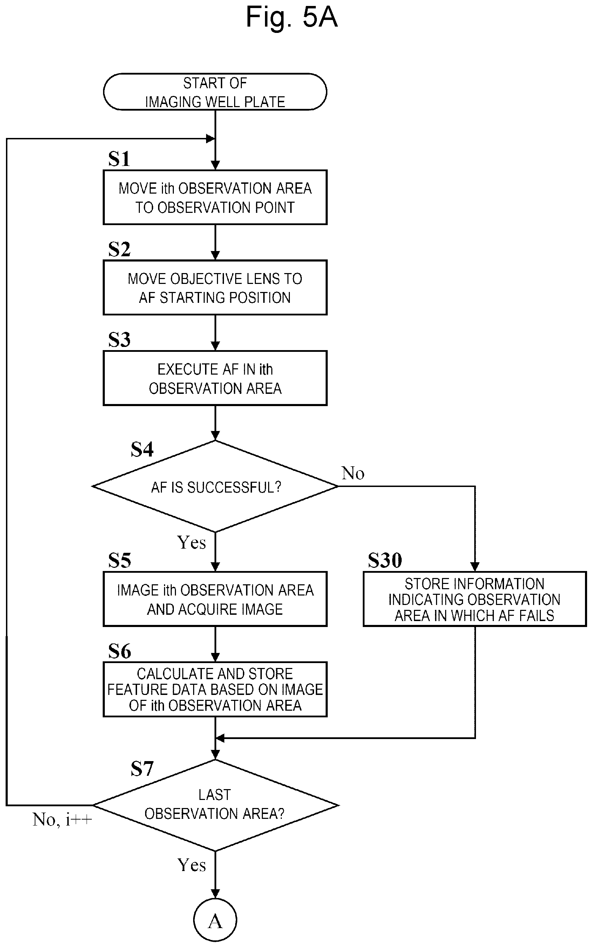

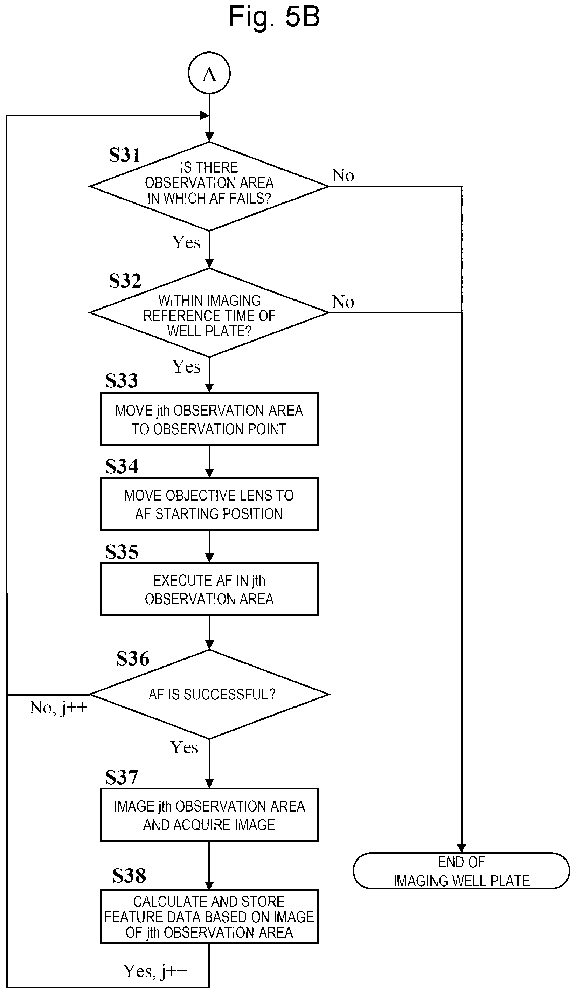

The observation device 1 according to Embodiment 3 executes autofocus in all of the observation areas 3 of the well plate 2, and then retries autofocus in the observation area 3 in which the autofocus fails. FIGS. 5A and 5B are flowcharts showing an observation method executed by the observation device 1 according to Embodiment 3. Description overlapping with Embodiment 1 will be omitted as appropriate.

The control unit 105 determines whether autofocus is successful (S4). When it is determined that the autofocus fails (S4: No), the control unit 105 stores information indicating the observation area 3 in which the autofocus fails in the storage unit 107 (S30).

Then, the control unit 105 determines whether the ith observation area 3 is the last observation area 3 of the well plate 2 (S7). When it is determined that the ith observation area 3 is the last observation area 3 of the well plate 2 (S7: Yes), the observation device 1 retries the autofocus in the observation area 3 in which the autofocus fails using a remaining time of an imaging reference time of the well plate 2. The imaging reference time of the well plate 2 is a time required for imaging all of the observation areas 3 of the well plate 2, and is determined based on the number of observation areas 3 and a certain time for determining whether the autofocus is successful. The remaining time is generated due to characteristics of autofocus in which a time required for autofocus varies due to various factors such as flatness of the well plate 2, an influence of external vibration, and a bacteria growth state.

S31 to S38 are processing related to a retry of the autofocus. The control unit 105 determines whether there is information indicating the observation area 3 in which the autofocus fails in the storage unit 107 (S31). When there is no information indicating the observation area 3 in which the autofocus fails (S31: No), the flowchart ends. On the other hand, when there is information indicating the observation area 3 in which the autofocus fails (S31: Yes), an elapsed time from the start of imaging of the well plate 2 is confirmed, and it is determined whether the elapsed time is within the imaging reference time of the well plate 2 (S32). When the elapsed time exceeds the imaging reference time (S32: No), the flowchart ends.

When the elapsed time is within the imaging reference time (S32: Yes), the control unit 105 controls the XY stage unit 102 to move the jth observation area 3 in which the autofocus fails to an observation point of the inverted microscope optical system 103 in order to observe the jth observation area 3 in which the autofocus fails, j being an integer of 1 or more, and an initial value being 1 (S33). Next, the control unit 105 controls the objective lens actuator 110 to move the objective lens 109 to the AF starting position (S34). The AF starting position in S34 may be the home position, or may be the focus position of the observation area 3 which is adjacent to the jth observation area 3 and in which the autofocus is successful.

Next, the control unit 105 controls the autofocus unit 104 to execute autofocus in the jth observation area 3 in which the autofocus fails (S35). Next, the control unit 105 determines whether the autofocus is successful (S36). When it is determined that the autofocus is successful within a certain time (S36: Yes), the control unit 105 images the observation area 3 at the focus position of the jth observation area 3 in which the autofocus fails, and acquires an image of the jth observation area 3 (S37). In addition, the control unit 105 stores, in the storage unit 107, feature data that is related to the jth observation area 3 in which the autofocus fails and is calculated by the image processing unit 106 (S38). A certain time during a retry may be the same as or different from a certain time at the first time. For example, it is possible to retry autofocus in all of the observation areas 3 which are retry targets by making the certain time during a retry shorter than the certain time at the first time.

When it is determined that the autofocus is not successful within the certain time (S36: No), j is incremented and the processing returns to S31.

### <Effects of Embodiment 3>

In the Embodiment 3, autofocus is retried in the observation area 3 in which autofocus fails, and first autofocus is preferentially executed in all of the observation areas 3 of the well plate 2. After the first autofocus is executed in all of the observation areas 3 of the well plate 2, the autofocus can be retried by using a remaining time of the imaging reference time of the well plate 2 set in consideration of variations in a time required for the autofocus and the like. When the autofocus is successful in this retry, data loss can be reduced. Other effects are the same as those in Embodiment 1, and description thereof is omitted.

### (Embodiment 4)

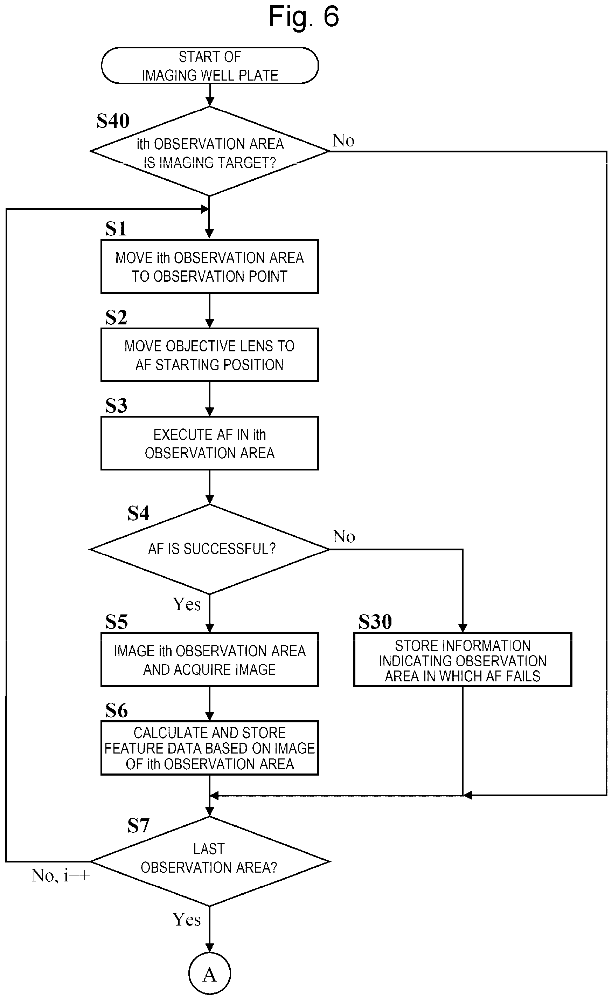

When the same well plate 2 as the well plate 2 observed previously is observed again, the observation device 1 according to Embodiment 4 excludes the observation area 3 indicating feature data exceeding a predetermined threshold previously or the observation area 3 in which the autofocus failed previously from an execution target of the autofocus. FIG. 6 is a flowchart showing an observation method executed by the observation device 1 according to Embodiment 4. Description overlapping with Embodiment 1 will be omitted as appropriate. Continuation of the flowchart in FIG. 6 is the same as that in FIG. 5B, and thus description thereof is omitted. In Embodiment 4, the observation area 3 indicating feature data exceeding the predetermined threshold a plurality of times previously or the observation area 3 in which the autofocus failed a plurality of times previously may be excluded from an execution target of the autofocus.

First, the control unit 105 determines whether the ith observation area 3 is an imaging target (S40). When it is determined that the ith observation area 3 is not the imaging target (S40: No), the processing in S 1 to S6 and S30 are skipped. In order to determine whether the ith observation area 3 is the imaging target, the control unit 105 refers to information that indicates the observation area 3 in which the autofocus failed and is stored in the storage unit 107 in the previous S30 and information indicating the feature data of the observation area 3 stored in the storage unit 107 in the previous S6 or S3 8.

In the observation area 3 in which both the autofocus and the retry of the autofocus failed previously, it can be estimated that the well plate 2 has a problem and subsequent autofocus also fails. Therefore, the control unit 105 excludes the observation area 3 in which both the autofocus and the retry of the autofocus failed previously from the execution target of the autofocus. When previous feature data exceeded the threshold, sufficient information for determining whether there is bacteria growth is already obtained. Therefore, the control unit 105 excludes the observation area 3 in which the previous feature data exceeds the threshold from the execution target of the autofocus.

### <Effects of Embodiment 4>

When autofocus is executed in the observation area 3 containing bacteria as in a drug sensitivity test, for example, there are following three factors that cause a failure of the autofocus. (1) Bacteria in each of the observation areas 3 significantly grow and block reflection of light from a light source. (2) Light from a light source is blocked due to an influence of damage or foreign matters adhered on a bottom surface, a back surface, or the like of each of the observation areas 3 of the well plate 2. (3) During an autofocus operation, a distance between the objective lens 109 and the well plate 2 varies due to external vibration or the like, and the autofocus is not stabilized.

However, there is a high possibility that a retry of the autofocus fails again in the observation area 3 indicating the above-described (1) significant growth of bacteria which is a failure factor of the autofocus, and there is a high possibility that information necessary for determining whether there is bacteria growth was already obtained in previous imaging. Therefore, there is little merit of a retry of the autofocus. Since there is a high possibility that a retry of the autofocus fails again in the observation area 3 indicating the above-described (2) damage and foreign matters on the well plate 2, there is little merit of a retry of the autofocus. As described above, in bacteria observation, it is necessary to complete imaging of the well plate 2 within the imaging reference time of the well plate 2, and it is preferable that the imaging reference time of the well plate 2 is set to be short in order to improve throughput. Therefore, it is not preferable that time is spent for a retry of the autofocus in the observation area 3 having little merit and time runs out before imaging other observation areas 3, which increases a risk of causing data loss. The risk is particularly significant in a latter half stage of an analysis in which bacteria growth occurs. Furthermore, in the case of (3) where autofocus is not stabilized, when the observation device 1 stands by until the autofocus is stabilized, as described above, time is spent on the observation area 3 in which the autofocus is not stabilized and a risk of causing data loss in other observation areas 3 is increased.

Here, in Embodiment 4, the observation area 3 in which sufficient information for determining whether there is bacteria growth is obtained or the observation area 3 having a high probability that the well plate 2 has a problem or autofocus fails is excluded from the execution target of the autofocus in advance. Since it is possible to assign a time that should originally be spent for imaging the above observation area 3 to imaging of other observation areas 3 and a retry of the autofocus, it is possible to further reduce data loss. Other effects are the same as those in Embodiment 1, and description thereof is omitted.

The invention is not limited to the above-described embodiments, and includes various modifications. The above-described embodiments have been described in detail to facilitate understanding of the invention, and the invention is not necessarily limited to those including all the configurations described above. A part of a configuration in one embodiment can be replaced with a configuration in another embodiment, and a configuration in one embodiment can also be added to a configuration in another embodiment. A part of a configuration in each embodiment may also be added to, deleted from, or replaced with another configuration.

### Reference Signs List

1: observation device
2: well plate
3: observation area
102: XY stage unit
103: inverted microscope optical system
104: autofocus unit
105: control unit
106: image processing unit
107: storage unit
108: illumination
109: objective lens
110: objective lens actuator
111: image sensor
112: dichroic mirror
113: image-forming lens
114: focusing light source
115: collimating lens
116: beam splitter
117: focusing image-forming lens
118: cylindrical lens
119: light receiving element

## Claims

1. An observation method for successively observing a first observation area and a second observation area which are observation targets, the observation method comprising:
executing autofocus in the first observation area; and
in a case where the autofocus in the first observation area is successful, imaging the first observation area and executing the autofocus in the second observation area starting from a first position of an objective lens when the autofocus in the first observation area is successful.

2. The observation method according to claim 1, wherein
executing the autofocus in the second observation area starting from the first position includes
starting the autofocus from the first position, and
starting the autofocus from a position shifting from the first position.

3. The observation method according to claim 1, further comprising:
in a case where the autofocus in the second observation area is successful, imaging the second observation area, and executing the autofocus in a third observation area which is an observation target subsequent to the second observation area starting from a second position of the objective lens when the autofocus in the second observation area is successful; and
in a case where the autofocus in the second observation area fails, executing the autofocus in the third observation area starting from the first position.

4. The observation method according to claim 1, further comprising:
in a case where the autofocus in the second observation area is successful, imaging the second observation area, and executing the autofocus in a third observation area which is an observation target subsequent to the second observation area starting from a second position of the objective lens when the autofocus in the second observation area is successful; and
in a case where the autofocus in the second observation area fails, executing the autofocus in the third observation area starting from a predetermined home position.

5. The observation method according to claim 1, further comprising:
imaging an observation area which is a target of the autofocus regardless of whether the autofocus is successful or fails.

6. The observation method according to claim 1, wherein
an observation area which is a target of the autofocus is not imaged when the autofocus fails.

7. The observation method according to claim 1, further comprising:
after executing the autofocus in all observation areas to be successively observed, the autofocus is retried in an observation area in which the autofocus fails until a preset imaging reference time elapses.

8. The observation method according to claim 1, wherein
when a container having the first observation area and the second observation area is observed again, an observation area indicating feature data exceeding a predetermined threshold one or more times previously or an observation area in which the autofocus failed one or more times previously is excluded from an execution target of the autofocus.

9. An observation device for successively observing a first observation area and a second observation area which are observation targets, the observation device comprising:
an autofocus unit configured to execute autofocus in the first observation area and the second observation area; and
a control unit configured to control the autofocus unit to, in a case where the autofocus in the first observation area is successful, image the first observation area and execute the autofocus in the second observation area starting from a first position of an objective lens when the autofocus in the first observation area is successful.

10. The observation device according to claim 9, wherein
when the autofocus in the second observation area is executed from the first position,
the control unit
controls the autofocus unit to start the autofocus from the first position, or
controls the autofocus unit to start the autofocus from a position shifting from the first position.

11. The observation device according to claim 9, wherein
the control unit
in a case where the autofocus in the second observation area is successful, controls the autofocus unit to image the second observation area and execute the autofocus in a third observation area which is an observation target subsequent to the second observation area starting from a second position of the objective lens when the autofocus in the second observation area is successful, and
in a case where the autofocus in the second observation area fails, controls the autofocus unit to execute the autofocus in the third observation area starting from the first position.

12. The observation device according to claim 9, wherein
the control unit
in a case where the autofocus in the second observation area is successful, controls the autofocus unit to image the second observation area and execute the autofocus in a third observation area which is an observation target subsequent to the second observation area starting from a second position of the objective lens when the autofocus in the second observation area is successful, and
in a case where the autofocus in the second observation area fails, controls the autofocus unit to execute the autofocus in the third observation area starting from a predetermined home position.

13. The observation device according to claim 9, wherein
the control unit further
after the autofocus is executed in all observation areas to be successively observed, controls the autofocus unit to retry the autofocus in an observation area in which the autofocus fails until a preset imaging reference time elapses.

14. The observation device according to claim 9, wherein
the control unit
when a container having the first observation area and the second observation area is observed again, excludes an observation area indicating feature data exceeding a predetermined threshold one or more times previously or an observation area in which the autofocus failed one or more times previously from an execution target of the autofocus.
